Europäisches Patentamt

European Patent Office

Office européen des brevets

(11) Veröffentlichungsnummer: **0 287 553 B1**

# (12) EUROPÄISCHE PATENTSCHRIFT

(45) Veröffentlichungstag der Patentschrift:
27.12.90

(21) Anmeldenummer: 88890090.9

(22) Anmeldetag: 08.04.88

(51) Int. Cl.⁵: **A01C 7/04**

(54) **Pneumatische Einzelkornsämaschine.**

(30) Priorität: **14.04.87 AT 934/87**

(43) Veröffentlichungstag der Anmeldung:
**19.10.88 Patentblatt 88/42**

(45) Bekanntmachung des Hinweises auf die Patenterteilung:
**27.12.90 Patentblatt 90/52**

(84) Benannte Vertragsstaaten:
**BE CH DE FR GB IT LI LU**

(56) Entgegenhaltungen:
**AT-B- 378 463**
**DD-A- 224 753**
**FR-A- 2 220 123**

(73) Patentinhaber: **STEYR-DAIMLER-PUCH AKTIENGESELLSCHAFT, Franz-Josefs-Kai 51, A-1010 Wien(AT)**

(72) Erfinder: **Knell, Karl, Dipl.-Ing., A-4400 Steyr im Pyrach 28(AT)**

## Beschreibung

Die Erfindung betrifft eine pneumatische Einzelkornsämaschine, mit einer einem Saatgutbehälter nachgeordneten Zuführkammer mit Druckleitung, einer drehbaren Säscheibe, welche zur Kornaufnahme stirn- oder umfangsseitige Vertiefungen aufweist, mit einer mit der Zuführkammer über Öffnungen verbundenen Zwischenkammer und mit einem Abwurfelement.

Als Stand der Technik ist bereits eine Einzelkornsämaschine bekannt, bei welcher beidseitig einer Zuführkammer jeweils eine Zwischenkammer angeordnet ist (FR-A 2 220 123). Hierbei ist die äußere Begrenzung jeder Zwischenkammer als Säscheibe ausgebildet, welche stirnseitig Vertiefungen aufweist. Zwischen der Zuführkammer und den beiden Zwischenkammern sind im unteren Bereich zwei große Öffnungen vorgesehen, durch welche das Saatgut austritt. Weiterhin befindet sich im mittleren Bereich jeweils ein Abwurfelement, wobei das Saatgut aus der jeweiligen Vertiefung in das Abwurfelement geschleudert wird. Diese bekannte Ausführungsform ist bau- und kostenaufwendig, wobei außerdem infolge des Konstruktionsprinzipes nicht immer einwandfrei die Vereinzelung des Saatgutes gewährleistet ist.

Bei einer weiteren bekannten Sämaschine ist die mit umfangsseitigen Vertiefungen zur Kornaufnahme versehene Säscheibe hohl ausgebildet (DD-A 224753). Die Scheibenbohrungen führen von den Vertiefungen in den Scheibenhohlraum. Dieser Scheibenhohlraum ist durch einen Stator in einen Unterdruckraum, einem Überdruckraum und einen Normalraum unterteilt, wobei sich der Saatgutbehälter, in den die Säscheibe eintaucht, im unteren Bereich befindet und demnach auch der Unterdruckraum im unteren Säscheibenbereich angeordnet ist. Die Körner werden dort in den einzelnen Vertiefungen am Scheibenumfang angesaugt und durch die Drehung der Scheibe, deren obere Hälfte abgedeckt und mit dem Normaldruckraum verbunden ist, aufwärts gefördert, von sie schließlich zum seitlichen Abwurf gelangen. In diesem Bereich liegt der Überdruckraum, so daß die Saatkörner aus den Vertiefungen in das Abwurfrohr ausgeblasen werden.

Es ergibt sich damit eine komplizierte und raumaufwendige Konstruktion, da dem durch den Stator unterteilen Hohlraum der Säscheibe nicht nur Druckluft zugeführt, sondern auch eine Unterdruckquelle mit entsprechenden Zu- bzw. Ableitungen zugeordnet werden muß. Außerdem ergibt sich für das Einzelkorn durch die Anordnung der Säscheibe oberhalb des Saatgutbehälters eine beträchtliche Fallhöhe bis zur Bodenfurche, die die exakte Einhaltung der Abstände der einzelnen Körner in der Furche beeinträchtigt.

Es ist weiterhin eine Einzelkornsämaschine mit einer die Rückwand eines Saatgutbehälters bildenden, an ein Sauggebläse angeschlossenen, antreibbaren Säscheibe bekannt (AT-A 378463), bei der die Vertiefungen für die Saatkörner stirnseitig angeordnet sind und die angesaugten Saatkörner entlang einer vom Bodenbereich des Saatgutbehälters nach oben aus dem Saatgut führenden Bahn durch eine Behälteröffnung aus dem Saatgutbehälter ausgetragen werden. Hier fehlt das sonst erforderliche Druckluftgebläse, so daß sich eine gewisse Vereinfachung ergibt; es hat sich jedoch gezeigt, daß das bloße Fallenlassen der Samenkörner nach dem Austritt aus dem Wirkungsbereich des Sauggebläses ebenfalls Ungenauigkeiten hinsichtlich der Kornabstände auf dem Boden zur Folge hat, da durch die Unterschiede der Form und der Rauhigkeit der Samenkörner einerseits und der damit auch gegebenen unterschiedlichen Fallgeschwindigkeit der Körner andererseits die zeitliche Ablösung des Einzelkorns von der Säscheibe und die Zeitdauer des Fallens selbst schwanken.

Demgegenüber liegt der vorliegenden Erfindung die Aufgabe zugrunde, eine Konstruktionsvereinfachung zu erzielen, wobei die Einhaltung genauer Kornabstände innerhalb der Saatreihe gewährleistet sein soll.

Diese Aufgabe wird erfindungsgemäß dadurch gelöst, daß die Säscheibe zwischen der Zuführkammer und der Zwischenkammer angeordnet ist, daß alle Vertiefungen der Säscheibe über die Drosselstellen bildenden Öffnungen mit der Zwischenkammer verbunden sind und daß zwischen der Zuführkammer und der Zwischenkammer einerseits und dem Abwurfelement andererseits eine Druckdifferenz besteht.

Da also nur mit Überdruck in der Zuführkammer gearbeitet wird, genügt eine entsprechende Druckzuleitung, und es erübrigt sich ein eigener Saugleitungsanschluß. Dennoch aber werden die Einzelkörner aus den Vertiefungen nicht bloß fallengelassen, sondern ausgeblasen, und es erfolgt auch ein sicheres Haften der Einzelkörner in den Vertiefungen im Bereich der Zuführkammer, da zwischen dieser und der gemeinsamen Zwischenkammer eine Druckdifferenz herrscht, die das Ansaugen der Körner in die Vertiefungen bewirkt, wie dies bisher nur mit einem eigenen Saugleitungsanschluß erreicht werden konnte. Anderseits ist innerhalb der Zwischenkammer der Luftdruck immer noch so groß, daß sich eine entsprechende Druckdifferenz gegenüber dem Atmosphärendruck im Abwurfbereich ergibt, so daß das gewünschte Abblasen der Einzelkörner aus den Vertiefungen erfolgt. Die Druckdifferenz ergibt sich einfach dadurch, daß die die Vertiefungen mit der gemeinsamen Zwischenkammer verbindenden Scheibenbohrungen als Drosselstellen wirken.

Obwohl also nur ein Druckleitungsanschluß, beispielsweise von einem Druckgebläse her, notwendig ist, wird wie bei den bekannten Maschinen mit Saug- und Druckanschluß angesaugt und abgeblasen, weil stets die Druckdifferenz zwischen der Zuführkammer und der Zwischenkammer bzw. letzterer und der Atmosphäre im Abwurfbereich vorhanden ist. Das Fehlen einer eigenen Saugleitungseinrichtung ergibt die gewünschte konstruktive Vereinfachung, während durch das Ausblasen der Körner im Abwurfbereich die bisherigen Schwierigkeiten bei bloßem Kornabfal beseitigt sind.

Selbstverständlich muß dafür gesorgt sein, daß in der gemeinsamen Zwischenkammer ein gewisser Überdruck gegenüber dem reinen Atmosphärendruck im Abwurfbereich vorhanden ist, da sonst das Abblasen der in den Vertiefungen befindlichen Saatkörner nicht gewährleistet wäre. Dieser Überdruck läßt sich einfach dadurch erzielen, daß sich die Zuführkammer jeweils über eine größere Anzahl von Vertiefungen erstreckt als sich im Abwurfbereich befinden, wobei vorausgesetzt wird, daß die Saatkörner die Öffnungen der Scheibenbohrungen in den Vertiefungen nicht vollkommen verschließen, so daß immerhin noch ein Teil der Druckluft in die Zwischenkammer gelangen kann.

Um auch bei vollkommenem Verschluß der Scheibenbohrungen im Bereich der Zuführkammer, was beispielsweise bie pilletierten Rübensamen vorkommen kann, den erforderlichen Überdruck in der folgenden Zwischenkammer sicherzustellten, führt von der Zuführkammer in die gemeinsame Zwischenkammer eine mit einem Druckhalteventil versehene Umgehungsleitung.

In der Zeichnung ist der Erfindungsgegenstand beispielsweise dargestellt, und zwar zeigen

Fig. 1 die erfindungswesentlichen Teile einer pneumatischen Einzelkornsämaschine in Seitenansicht,
Fig. 2 einen zugehörigen Schnitt nach der Linie II-II der Fig. 1 und
Fig. 3 eine Ausführungsvariante einer Einzelkornsämaschine im Schnitt quer zur Säscheibenachse.

Auf einer Welle 1 ist eine Säscheibe 2 befestigt, die mit stirnseitigen Vertiefungen 3 zur Kornaufnahme versehen ist. Diese Scheibe 2 schließt dicht an ein Gehäuse 4 an, das eine Zuführkammer 5 bildet. Die Zuführkammer 5 ist über einen Einlauf 6 mit einem nicht dargestellten Saatgutbehälter verbunden, wobei der Saatgutbehälter mit der Zuführkammer 5 druckdicht ausgebildet ist. In den Zuführbehälter 5 mündet eine beispielsweise an ein Druckgebläse angeschlossene Druckleitung 7.

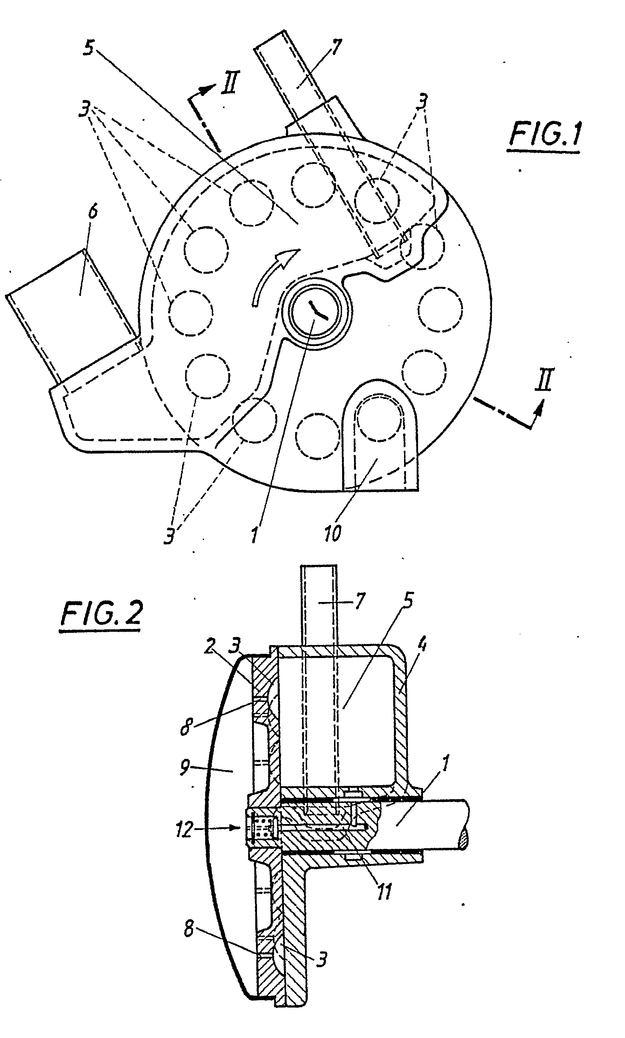

Die Vertiefungen 3 sind durch Scheibenbohrungen 8, die jeweils eine Drosselstelle bilden, mit einer gemeinsamen Zwischenkammer 9 verbunden, die an der Säscheibe 2 druckdicht befestigt ist. Im unteren Teil des Gehäuses 4 befindet sich ein Abwurf 10. Es ist ersichtlich, daß sich die Zuführkammer 5 über mehrer Vertiefungen 3 erstreckt, wogegen sich im Bereich des Abwurfes 10 immer nur eine Vertiefung befindet, so daß für eine Druckdifferenz nicht nur zwischen der Zuführkammer 5 und der Zwischenkammer 9, sondern auch zwischen letzterer und dem Abwurf 10 gesorgt ist. Um auf jeden Fall dafür zu sorgen, daß in der Zwischenkammer 9 ein gegenüber der Atmosphäre bzw. dem Abwurf 10 erhöter Druck herrscht, kann von der Zuführkammer 5 in die Zwischenkammer 9 eine Umgehungsleitung 11 führen, die mit einem Druckhalteventil 12 (Fig. 2) versehen ist.

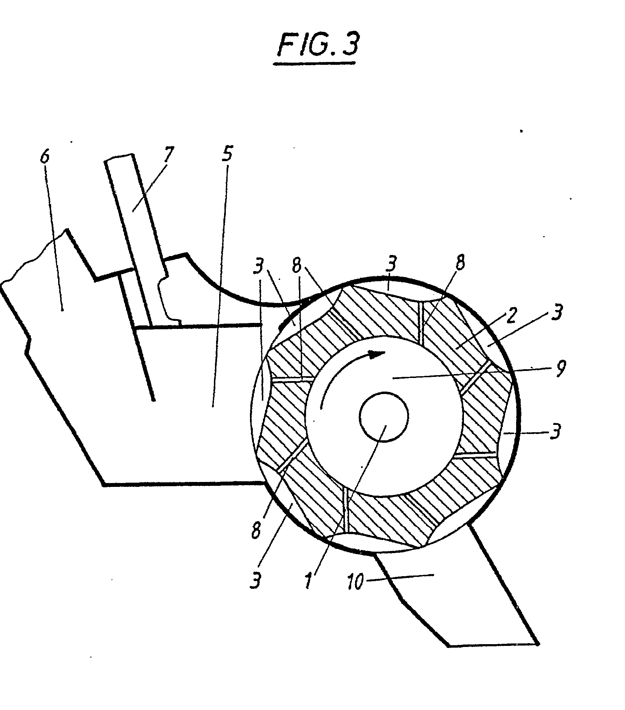

Die Ausführungsvariante nach Fig. 3 unterscheidet sich von der Ausführungsform gemäß den Fig. 1 und 2 vor allem dadurch, daß die Vertiefungen 3 in der Säscheibe 2 nicht stirnseitig, sondern umfangsseitig angeordnet sind. Die Zwischenkammer 9, zu der die Scheibenbohrungen 8 führen, befindet sich daher im Inneren der hohlen Säscheibe 2, wobei der die Zwischenkammer 9 bildende Hohlraum selbstverständlich stirnseitig abgedichtet ist. Im übrigen sind die einander entsprechenden Teile der beiden Ausführungsvarianten mit gleichen Bezugszeichen versehen.

**Patentansprüche**

1. Pneumatische Einzelkornsämaschine, mit einer einem Saatgutbehälter nachgeordneten Zuführkammer mit Druckleitung, einer drehbaren Säscheibe, welche zur Kornaufnahme stirn- oder umfangsseitige Vertiefungen aufweist, mit einer mit der Zuführkammer über Öffnungen verbundenen Zwischenkammer und mit einem Abwurfelement, dadurch gekennzeichnet, daß die Säscheibe (2) zwischen der Zuführkammer (5) und der Zwischenkammer (9) angeordnet ist, daß alle Vertiefungen (3) der Säscheibe (2) über die Drosselstellen bildenden Öffnungen (8) mit der Zwischenkammer (9) verbunden sind und daß zwischen der Zuführkammer (5) und der Zwischenkammer (9) einerseits und dem Abwurfelement (10) andererseits eine Druckdifferenz besteht.

2. Einzelkornsämaschine nach Anspruch 1, dadurch gekennzeichnet, daß sich in an sich bekannter Weise die Zuführkammer (5) jeweils über eine größere Anzahl von Vertiefungen (3) erstreckt als sich diese im Abwurfbereich befinden.

3. Einzelkornsämaschine nach Anspruch 1, dadurch gekennzeichnet, daß von der Zuführkammer (5) in die gemeinsame Zwischenkammer (9) eine mit einem Druckhalteventil (12) versehene Umgehungsleitung (11) führt.

**Claims**

1. A pneumatic seed spacing drill comprising a feeding chamber, which succeeds a seed container and is provided with a pressure line, a rotatable seeding disk, which is formed in an end face or on its periphery with recesses for receiving seeds, an intermediate chamber, which communicates through openings with the feeding chamber, and a discharge element, characterized in that the seeding disk (2) is disposed between the feeding chamber (5) and the intermediate chamber (9), all recesses (3) of the seeding disk (2) communicate with the intermediate chamber (9) through the openings (8), which constitute constrictions, and there is a pressure difference between the feeding chamber (5) and the intermediate chamber (9), on the one hand, and the discharge element (10), on the other hand.

2. A seed spacing drill according to claim 1, characterized in that, in a manner known per se, the feeding chamber (5) extends over recesses (3) which are larger in number than the recesses disposed in the discharge region.

3. A seed spacing drill according to claim 1, characterized in that a by-pass line (11) provided with a pressure holding valve (12) leads from the feeding chamber (5) to the common intermediate chamber (9).

## Revendications

1. Semoir monograine pneumatique avec une chambre d'alimentation à conduite sous pression disposée en aval d'un réservoir de graines de semence, avec un disque de semage rotatif qui présente dans une face latérale ou périphérique des cavités pour la réception des graines, avec une chambre intermédiaire reliée par des ouvertures à la chambre d'alimentation et avec un élément de déchargement, caractérisé en ce que,
   - le disque de semage (2) est disposé entre la chambre d'alimentation (5) et la chambre intermédiaire (9),
   - toutes les cavités (3) du disque de semage (2) sont reliées à la chambre intermédiaire (9) par des ouvertures (8) constituant des canaux d'étranglement,
   - il existe une différence de pression entre d'une part la chambre d'alimentation (5) et la chambre intermédiaire (9) et d'autre part l'élément de déchargement (10).

2. Semoir monograine selon la revendication 1 caractérisé en ce que, de façon connue en soi, la chambre d'alimentation (5) s'étend au-dessus d'un plus grand nombre de cavités (3) qu'il ne s'en trouve dans la zone de déchargement.

3. Semoir monograine selon la revendication 1 caractérisé en ce qu'une conduite de dérivation (11) pourvue d'une soupape (12) de maintien de la pression s'étend de la chambre d'alimentation (5) à la chambre intermédiaire commune (9).

EP 0 287 553 B1

FIG.1

FIG.2

## FIG.3